# EUROPEAN PATENT SPECIFICATION

(11) **EP 2 075 950 B1**
(45) Date of publication and mention of the grant of the patent: **20.04.2011**
(21) Application number: 07801034.5
(22) Date of filing: 05.09.2007
(51) Int. Cl.: H04W 92/14

(54) **METHOD, SYSTEM FOR MANAGING A-INTERFACE CIRCUIT AND MGW**
VERFAHREN, SYSTEM ZUR VERWALTUNG EINER SCHNITTSTELLENSCHALTUNG UND MGW
PROCÉDÉ ET SYSTÈME POUR GESTION D'UN CIRCUIT D'INTERFACE A ET PASSERELLE MEDIA

(30) Priority: 28.09.2006 CN 200610152361
(43) Date of publication of application: 01.07.2009
(73) Proprietor: Huawei Technologies Co., Ltd., Shenzhen, Guangdong Province 518129 (CN)
(72) Inventor: ZHANG, Hao, Shenzhen Guangdong 518129 (CN); HAN, Runsheng, Shenzhen Guangdong 518129 (CN); WANG, Yong, Shenzhen Guangdong 518129 (CN); LUO, Hualin, Shenzhen Guangdong 518129 (CN); CHEN, Youjun, Shenzhen Guangdong 518129 (CN); YE, Sihai, Shenzhen Guangdong 518129 (CN); CUI, Xiaochun, Shenzhen Guangdong 518129 (CN)
(74) Representative: Gulde Hengelhaupt Ziebig & Schneider
(86) International application number: PCT/CN2007/070625
(87) International publication number: WO 2008/037208

(56) References cited:
- WO-A1-2006/071092
- WO-A2-01/58086
- WO-A2-2006/065446
- CN-A- 1 508 992
- KR-A- 20050 070 176
- KR-A- 20050 117 233

## Description

### FIELD OF THE INVENTION

The present invention relates to mobile communication techniques, and more particularly, to method, system and media gateway for managing A interface circuit in a mobile communication network with separate bearing and controlling.

### BACKGROUND

In a mobile communication network with separate bearing and controlling, a Mobile Switching Center (MSC) is divided into two parts: a Mobile Switching Center Server (MSC Server) and a Media Gateway (MGW). In such a network, management of A interface circuit is mainly implemented by the MSC Server.

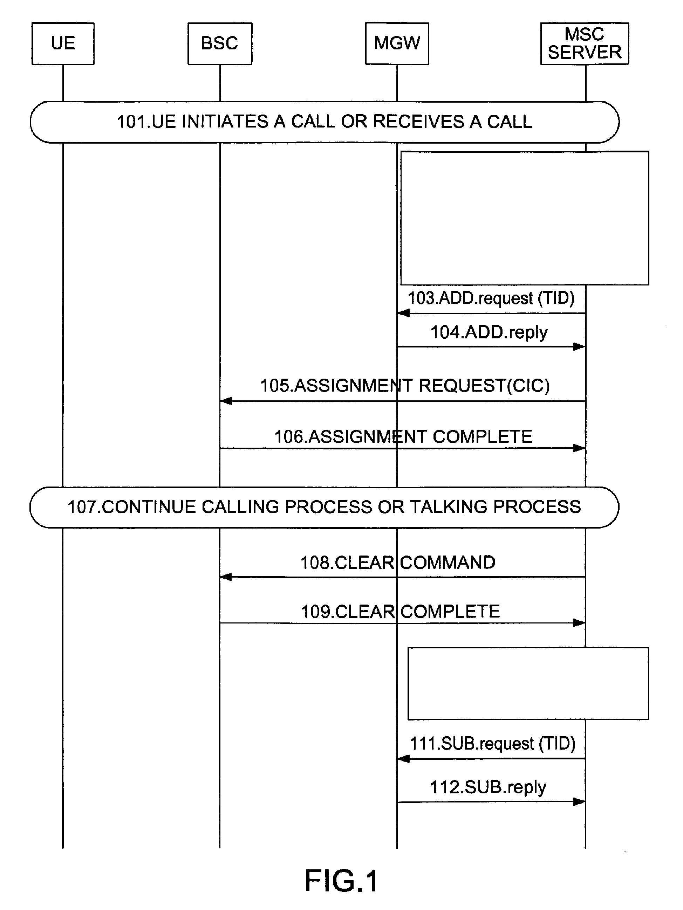

Fig 1 illustrates a schematic view of an assigning and releasing process of A interface circuit during a calling process, including:

Step 101: A User Equipment (UE) initiates a call or receives a call.

Step 102: By virtue of an A interface circuit management function, an MSC Server assigns, to the UE, an A interface circuit among idle A interface circuits in A interface circuit resources configured at a local office, and set the assigned A interface circuit to a busy status. Meanwhile, the MSC Server acquires a Circuit Identification Code (CIC) and a Termination Identifier (TID) corresponding to the A interface circuit through a correspondence between the self-configured A interface circuit and the CIC, TID.

Step 103: The MSC Server requests a Media Gateway (MGW) to reserve the A interface circuit which is assigned to the UE by the MSC Server by a Termination adding request (ADD.request) message, the ADD.request message carrying the TID corresponding to the A interface circuit assigned to the UE by the MSC Server.

Step 104: After receiving the ADD.request message, the MGW performs circuit reservation based on the TID carried in the ADD.request message and its self-configured correspondence relationships between A interface circuits and TIDs, and returns a Termination adding reply (ADD.reply) message to the MSC Server.

Step 105: After the circuit is successfully reserved, the MSC Server sends an ASSIGNMENT REQUEST message to a Based Station Controller (BSC) to request for bearer assignment on access side. The ASSIGNMENT REQUEST message carries the CIC corresponding to the A interface circuit assigned to the UE by the MSC Server

Step 106: After receiving the ASSIGNMENT REQUEST message, the BSC performs bearer assignment and returns an ASSIGNEMNT COMPLETE message to the MSC Server.

Step 107: Call processing or conversation keeps going.

Step 108: During a call releasing process for the UE, the MSC Server sends a CLEAR COMMAND message to the BSC.

Step 109: After receiving the CLEAR COMMAND message, the BSC releases Radio Resource (RR) connection, and returns a CLEAR COMPLETE message to the MSC Server.

Step 110: The MSC Server sets the A interface circuit occupied by the UE to an idle status.

Step 111: The MSC Server sends a Termination deletion request (SUB.request) message to the MGW, the SUB.request carrying the TID corresponding to the A interface circuit occupied by the UE.

Step 112: After receiving the SUB.request message, the MGW releases the A interface circuit corresponding to the TID carried in the SUB.request message, that is, the A interface circuit occupied by the UE, and returns a Termination deletion reply (SUB.reply) message to the MSC Server.

Therefore, an existing A interface circuit management is mainly completed by the MSC Server. Due to the huge amount of the MSC Servers in the mobile communication network, it is very complex to perform the management. Furthermore, in an MSC pool networking architecture with separate bearing and controlling, respective MSC Servers in the MSC pool are generally connected with respective Virtual Media Gateways (VMGW) in a same MGW. However, any one of the A interface circuits between the MGW and the BSCs connected with the MGW can only belong to one MSC Server and can not be shared by the respective MSC Servers, resulting a relatively low multiplexing of the A interface circuits. Additionally, when a new MSC Server is added into the MSC pool, it is necessary to add new A interface circuit resources through data configuration, or to transfer a part of the A interface circuit resources from other MSC Servers o the newly added MSC Server, thus increasing complexity in operation and maintenance for A interface circuits.
WO 01/58086 A2 discloses an Internet Protocol (IP)-based Base Station System (BSS) architecture. In particularly, D1 discloses that an MSC initiates the sequence by transmitting an Assignment Request message via a signaling link to an RNS, and an MGW allocates a TRA resource and connects the PCM coded side of the connection to the A-interface circuit.

### SUMMARY

The present invention provides method, system for managing A interface circuit and a media gateway thereof, so as to reduce complexity in A interface circuit management.

A method for managing A interface circuit provided by the present invention includes:
after receiving a circuit resource assignment request for assigning an A interface circuit to a UE, acquiring, by a Media Gateway (MGW), circuit selection reference information carried in the request, and sending, by a Mobile Switching Center (MSC) Server, the circuit resource assignment request to the MGW; and
assigning, by the MGW, an A interface circuit to the UE from A interface circuit resources configured at a local office according to the circuit selection reference information carried in the request, and sending A interface circuit information corresponding to the A interface circuit which is assigned to the UE to the MSC Server.

Corresponding to the method for managing A interface circuit provided by an embodiment of the present invention, an embodiment of the present invention also provides a system for managing A interface circuit. The system includes a Media Gateway (MGW) and a Mobile Switching Center (MSC) Server.

The MSC Server is configured to send a circuit resource assignment request for assigning an A interface circuit to a UE to the MGW.

The MGW is configured to receive the circuit resource assignment request sent by the MSC Server, acquire circuit selection reference information carried in the request, assign an A interface circuit to the UE from A interface circuit resources configured at a local office according to the circuit selection reference information carried in the request, and send A interface circuit information corresponding to the A interface circuit which is assigned to the UE to the MSC Server.

An embodiment of the present invention further provides a Media Gateway (MGW), including a transceiver unit and an assigning unit.

The transceiver unit is configured to receive a circuit resource assignment request for assigning an A interface circuit to a UE sent by Mobile Switching Center (MSC) Server, and send the received circuit resource assignment request to the assigning unit;

The assigning unit is configured to receive the circuit resource assignment request from the transceiver unit, acquire circuit selection reference information carried in the request, and assign an A interface circuit to the UE from A interface circuit resources configured at a local office according to the circuit selection reference information carried in the request;

The transceiver unit is further configured to send A interface circuit information corresponding to the A interface circuit which is assigned to the UE to the MSC Server.

Therefore, in the present invention, the A interface circuit management function is moved downward from the MSC Server to the MGW and the MGW performs management of A interface circuits, so that the complexity in A interface circuit management is reduced. Furthermore, in an MSC pool networking architecture with separate bearing and controlling, the technical solutions provided by the present invention may allow to share A interface circuit resources, increase multiplexing of A interface circuit and reduce complexity in operation and maintenance for A interface circuit.

### BRIEF DESCRIPTION OF THE DRAWING(S)

Fig 1 illustrates a schematic view of an assigning and releasing process of A interface circuit in prior art;

Fig 2 illustrates a schematic view of an assigning and releasing process of A interface circuit according to an embodiment of the present invention;

Fig 3 illustrates a schematic view of a structure of an A interface circuit management system according to an embodiment of the present invention; and

Fig 4 illustrates a schematic view of a Media Gateway according to an embodiment of the present invention.

### DETAILED DESCRIPTION

The technical solutions of the present invention are described in detail below in conjunction with accompanying drawings and embodiments.

According to Embodiments of the present invention, the A interface circuit management function is moved downward from the MSC Server to the MGW and the MGW performs the management of A interface circuits.

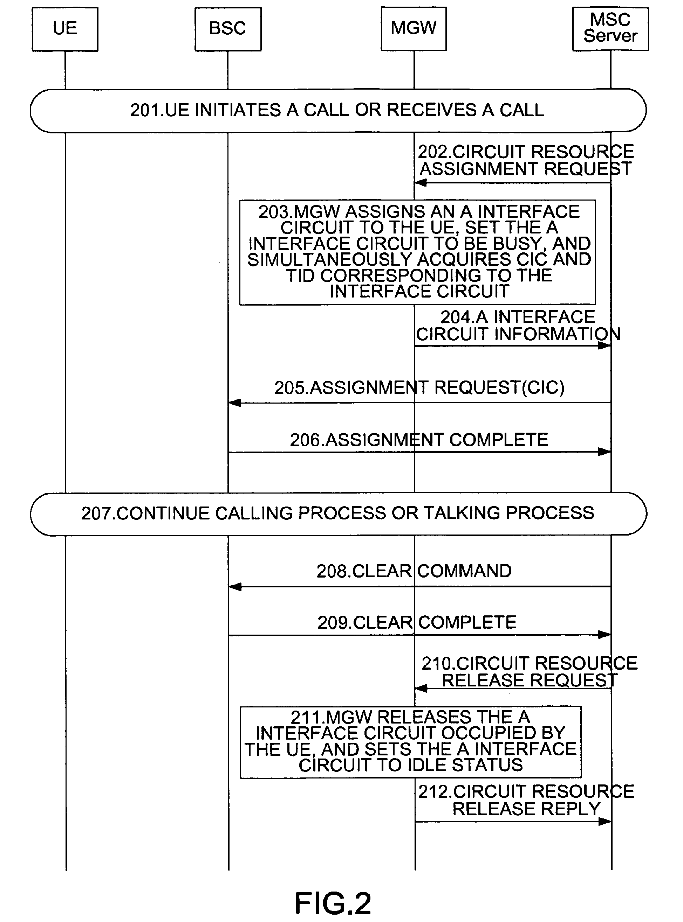

For example, in A interface circuit assignment and release procedure during a calling process, the A interface circuit management according to embodiments of the present invention is described in detail. As shown in Fig 2, the embodiment includes the following steps:

Step 201: A UE initiates a call or receives a call.

Step 202: When the UE initiates the call or receives the call, an MSC Server sends a circuit resource assignment request to an MGW for requesting the MGW to assign an A interface circuit to the UE, wherein the circuit resource assignment request carries circuit selection reference information.

The circuit selection reference information may include Termination office information, such as Office Code (OFC) or Network Identifier (NI), plus Originating Signaling Point Code (OPC), plus Destination Signaling Point Code (DPC). The OFC refers to the office code from a MSC Server to a BSC, OPC refers to the signaling point code of a MSC Server, and DPC refers to the signaling point code of a BSC. In the circuit resource assignment request, the MSC Server may further include information such as Public Land Mobile Network (PLMN) Bearer Capability (BC), Codec List, for MGW's reference when assigning an A interface circuit.

The MSC Server may send the circuit selection reference information, such as OCF (or NI, OPC and DPC), PLMN BC and Codec List to the MGW through an h.248 message of Mc interface, such as the ADD.request message. Or, the MSC Server may send the circuit selection reference information to the MGW through other messages.

Step 203: After receiving the circuit resource assignment request from the MSC Server, the MGW assigns, to the UE, an A interface circuit among idle A interface circuits in A interface circuit resources configured at a local office according to the circuit reference information carried in the circuit resource assignment request, and set the assigned A interface circuit to a busy status. And, the MGW acquires CIC and TID corresponding to the A interface circuit according to a predetermined association between the A interface circuits and CICs, TIDs.

Step 204: After the MGW successfully assigned the A interface circuit, the MGW returns A interface circuit information of the A interface circuit which is assigned to the UE to the MSC Server. The A interface circuit information includes CIC, TID, and may also include a Codec List etc.

The MGW may send the A interface circuit information to the MSC Server through the ADD.reply message, or send the A interface circuit information to the MSC Server through other messages.

Step 205: After receiving the A interface circuit information sent by the MGW, the MSC Server reserves the A interface circuit information, and sends an ASSIGNMENT REQUEST message to a BSC to request for bearer assignment at an access side, the ASSIGNMENT REQUEST message carrying CIC corresponding to the A interface circuit assigned to the UE by the MGW.

Step 206: After receiving the ASSIGNMENT REQUEST message, the BSC performs bearer assignment, and returns an ASSIGNEMENT COMPLETE message to the MSC Server.

Step 207: The MSC Server continues the calling process or talking process for the UE.

Step 208: During a call releasing process for the UE, the MSC Server sends a CLEAR COMMAND message to the BSC.

Step 209: After receiving the CLEAR COMMAND message, the BSC releases the Radio Resource (RR) connection and returns a CLEAR COMPLETE message to the MSC Server.

Step 210: The MSC Server sends a circuit resource release request to the MGW, the request carrying A interface circuit information (such as CIC, TID) of the A interface circuit need to be released.

The MSC Server may send A interface circuit information of the A interface circuit need to be released to the MGW through an h.248 message of Mc interface, such as the SUB.request message. Or, the MSC Server may send the A interface circuit information of the A interface circuit need to be released to the MGW through other messages. The A interface circuit need to be released may be the A interface circuit assigned to the UE.

Step 211: After receiving the circuit resource release request sent by the MSC Server, the MGW releases the A interface circuit corresponding to the A interface circuit information carried in the request, such as the A interface circuit occupied by the UE, and set the A interface circuit to be idle status.

For example, when the circuit resource release request carries a TID, the MGW determines the A interface circuit corresponding to the TID carried in the request by querying a self-configured association between the A interface circuits and CICs, TIDs, and performs the release.

Step 212: After the resource is released, the MGW returns a circuit resource release reply, such as the SUB.reply message to the MSC Server.

There also exists some particular MSC pool networking architectures with separate bearing and controlling, for example, some MSC Servers in the MSC pool use a same signaling point to connect a same BSC through the MGW. After receiving messages from the BSC, the MGW determines a destination MSC Server for the messages to be sent to a same signaling point based on user parameters carried in the messages, and sends the received messages to the destination MSC Server, that is, the MGW is responsible for delivering the messages from the BSC.

In such a particular MSC pool networking architecture with separate bearing and controlling, if the method for managing A interface circuit according to an embodiment of the present invention is utilized, then each one of the A interface circuits between the MGW and the BSC connected to the MGW does not need to belong to an MSC Server, respective MSC Servers within the MSC pool may share the A interface circuit resource of a same BSC, thus increasing multiplexing of A interface circuits and reducing complexity of operation and maintenance of A interface circuits.

Fig 2 illustrates A interface circuit management of MGW during the calling process. In an actual application, the MGW further implements processes of maintenance category operations for the A interface circuit, for example, to process BLOCK, UNBLOCK, RESET operations for the A interface circuit, which are initiated by an operation and management (O&M) system, or to process BLOCK, UNBLOCK, RESET operations for the A interface circuit, which are initiated by the BSC.

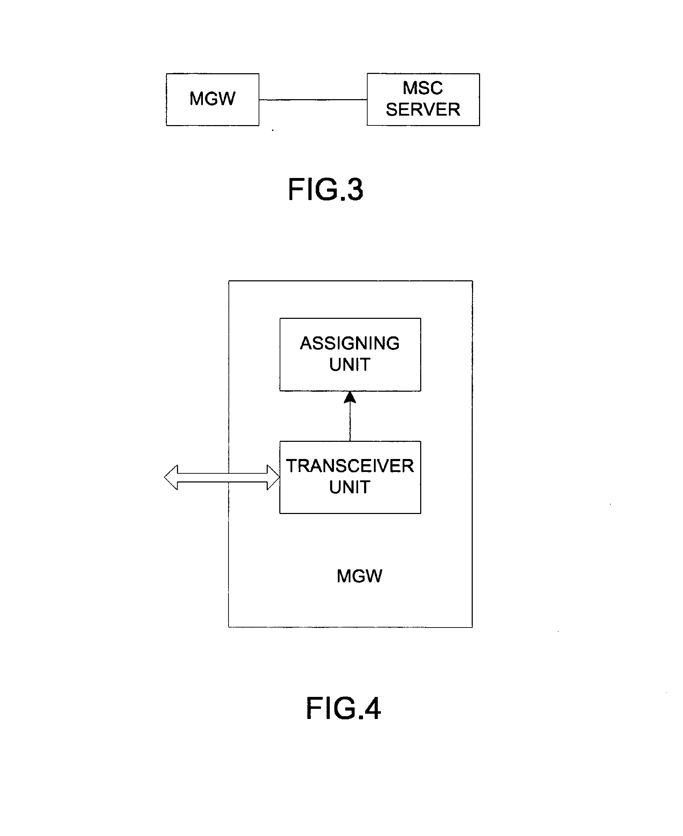

Corresponding to the method for managing A interface circuit provided by an embodiment of the present invention, an embodiment of the present invention also provides a system for managing A interface circuit. As shown in Fig 3, the system mainly includes a Media Gateway (MGW) and a Mobile Switching Center (MSC) Server. When performing assignment of A interface circuit, the MSC Server is configured to send a circuit resource assignment request to the MGW and receive the A interface circuit information from the MGW. The MGW is configured to receive the circuit resource assignment request sent by the MSC Server, assign an A interface circuit to the UE from A interface circuit resources configured at a local office according to the circuit selection reference information carried in the request, and send, to the MSC Server, A interface circuit information corresponding to the A interface circuit which is assigned to the UE.

When performing release of A interface circuit, the MSC Server is configured to send a circuit resource release request to the MGW; the MGW is configured to receive the circuit resource release request from the MSC Server and perform A interface circuit release operation according to the A interface circuit information carried in the request, corresponding to the A interface circuit need to be released.

The MGW is further configured to set the assigned A interface circuit to a busy status when assigning the A interface circuit, and set the released A interface circuit to an idle status when releasing A interface circuit.

The MGW is further configured to send the A interface circuit information corresponding to the A interface circuit which is assigned to the UE to the MSC Server: the MSC Server is further configured to receive the A interface circuit information corresponding to the A interface circuit which is assigned to the UE.

As shown in Fig 4, the MGW may include a transceiver unit, an assigning unit and a releasing unit. The transceiver unit is configured to receive a circuit resource assignment request, send the received circuit resource assignment request to the assigning unit, receive A interface circuit information from the assigning unit, and send the A interface circuit information to the MSC Server. The assigning unit is configured to receive the circuit resource assignment request from the transceiver unit, perform A interface circuit assignment among A interface circuit resources configured at a local office. The assignment may be an assignment of an A interface circuit to a UE from locally configured A interface circuit resources according to circuit selection reference information carried in the request, and send A interface circuit information corresponding to the assigned A interface circuit to the transceiver unit. The assigning unit is further configured to set the assigned A interface circuit to a busy status. The transceiver unit is further configured to send the A interface circuit information corresponding to the A interface circuit which is assigned to the UE to the MSC Server.

The transceiver unit is further configured to receive a circuit resource release request sent from the MSC Server, and send the received circuit resource release request to the releasing unit. The releasing unit is configured to receive the circuit resource release request from the transceiver unit, and release A interface circuit according to the A interface circuit information carried in the request, wherein the A interface circuit information corresponds to the A interface circuit need to be released. The releasing unit is further configured to set the released A interface circuit to an idle status.

An embodiment of the present invention further provides an MGW, having the same structure as shown in Fig 4 and will not be described again here.

The foregoing are merely various exemplary embodiments of the present invention, which are not intended to limit the present invention. Any modifications and variations can be made to the present invention by those skilled in the art. Any modifications, equivalents, improvements made within the present invention shall be construed as fall within the scope of the present invention.

## Claims

1. A method for managing A interface circuit, **characterized in** comprising:
acquiring, by a Media Gateway, MGW, after receiving a circuit resource assignment request for assigning an A interface circuit to a User Equipment, UE, circuit selection reference information carried in the request, wherein the circuit resource assignment request is sent to the MGW by a Mobile Switching Center, MSC, Server;
assigning, by the MGW, an A interface circuit to the UE from A interface circuit resources configured at a local office according to the circuit selection reference information carried in the request; and
sending A interface circuit information corresponding to the A interface circuit which is assigned to the UE to the MSC Server.

2. The method of claim 1, **characterized in that**, the circuit selection reference information comprises:
Network Identifier, NI, and Originating Signaling Point Code, OPC, and Destination Signaling Point Code, DPC; or
Office Code, OFC.

3. The method of claim 2, **characterized in that**, the circuit selection reference information further comprises:
Bearer Capability, BC, of Public Land Mobile Network, PLMN, Codec List.

4. The method of claim 1, **characterized in that**, assigning an A interface circuit to the UE comprises:
assigning an A interface circuit to the UE from the idle A interface circuits in A interface circuit resources configured at a local office.

5. The method of claim 4, **characterized in that**, after assigning an A interface circuit to the UE, the method further comprises:
setting, by the MGW, the A interface circuit assigned to the UE to a busy status.

6. The method of claim 1, **characterized in that**, sending A interface circuit information corresponding to the A interface circuit which is assigned to the UE to the MSC Server comprises:
acquiring A interface circuit information corresponding to the A interface circuit which is assigned to the UE according to a predetermined association between the A interface circuits and the A interface circuit information; and sending the acquired A interface circuit information to the MSC Server;
wherein the A interface circuit information comprises at least one of the followings: a Circuit Identification Code, CIC, or a Termination Identifier, TID.

7. The method of claim 6, **characterized in that**, sending A interface circuit information corresponding to the A interface circuit which is assigned to the UE to the MSC Server comprises:
sending, by the MGW, the A interface circuit information to the MSC Server through a Termination adding reply message.

8. The method of claim 6, **characterized in that**, after sending A interface circuit information corresponding to the A interface circuit which is assigned to the UE to the MSC Server, the method further comprises:
receiving, by the MGW, a circuit resource release request for releasing the circuit resource of the A interface circuit assigned to the UE; and
performing a release of A interface circuit according to the A interface circuit information carried in the circuit resource release request, wherein the A interface circuit information corresponds to the A interface circuit need to be released.

9. The method of claim 8, **characterized in that**, the A interface information corresponding to the A interface circuit need to be released comprises a Circuit Identification Code, CIC, or a Termination Identifier, TID; and
the release of A interface circuit comprises: determining, by the MGW, the A interface circuit to be released based on the CIC or TID, and a predetermined association between the A interface circuits and CICs, TIDs; and releasing the A interface circuit.

10. The method of claim 8, **characterized in that**, after releasing the A interface circuit, the method further comprises:
setting, by the MGW, the released A interface circuit to a busy status.

11. A system for managing A interface circuit, **characterized in** comprising a Media Gateway, MGW, and a Mobile Switching Center, MSC, Server, wherein
the MSC Server is configured to send a circuit resource assignment request for assigning an A interface circuit to a User Equipment, UE, to the MGW;
the MGW is configured to receive the circuit resource assignment request sent by the MSC Server, acquire circuit selection reference information carried in the request, assign an A interface circuit to the UE from A interface circuit resources configured at a local office according to the circuit selection reference information carried in the request, and send A interface circuit information corresponding to the A interface circuit which is assigned to the UE to the MSC Server.

12. The system of claim 11, **characterized in that**, the MGW is further configured to set the A interface circuit that is assigned to the UE to a busy status.

13. The system of claim 11, **characterized in that**, the MSC Server is configured to send, to the MGW, a circuit resource release request for releasing the circuit resource of the A interface circuit assigned to the UE;
the MGW is further configured to receive the circuit resource release request from the MSC Server, and release A interface circuit according to the A interface circuit information carried in the request, wherein the A interface circuit information corresponds to the A interface circuit need to be released.

14. The system of claim 13, **characterized in that**, the MGW is further configured to set the released A interface circuit to an idle status.

15. A Media Gateway, MGW, **characterized in** comprising a transceiver unit and an assigning unit, wherein
the transceiver unit is configured to receive a circuit resource assignment request for assigning an A interface circuit to a User Equipment, UE, sent by Mobile Switching Center, MSC Server, and send the received circuit resource assignment request to the assigning unit;
the assigning unit is configured to receive the circuit resource assignment request from the transceiver unit, acquire circuit selection reference information carried in the request, and assign an A interface circuit to the UE from A interface circuit resources configured at a local office according to the circuit selection reference information carried in the request;
the transceiver unit is further configured to send, to the MSC Server, A interface circuit information corresponding to the A interface circuit which is assigned to the UE.

16. The MGW of claim 15, **characterized in that**, the assigning unit is further configured to set the assigned A interface circuit to a busy status

17. The MGW of claim 15 or 16, **characterized in** further comprising a releasing unit, wherein
the transceiver unit is further configured to receive from the MSC Server a circuit resource release request for releasing the A interface circuit assigned to the UE, and send the received circuit resource release request to the releasing unit;
the releasing unit is configured to receive the circuit resource release request from the transceiver unit, and release A interface circuit according to the A interface circuit information carried in the request, wherein the A interface circuit information corresponds to the A interface circuit need to be released.

18. The MGW of claim 17, **characterized in that**, the releasing unit is further configured to set the released A interface circuit to an idle status.

## Patentansprüche

1. Verfahren zum Verwalten einer A-Schnittstellenschaltung, **gekennzeichnet durch** die folgenden Schritte:
ein Media-Gateway MGW beschafft nach dem Empfang einer Leitungsbetriebsmittel-Vergabeanforderung zum Vergeben einer A-Schnittstellenschaltung an ein Benutzergerät UE in der Anforderung geführte Leitungsauswahl-Referenzinformationen, wobei die Leitungsbetriebsmittel-Vergabeanforderung **durch** einen Server einer Mobilvermittlungsstelle MSC zu dem MGW gesendet wird;
das MGW vergibt eine A-Schnittstellenschaltung an das UE aus in einer Ortsvermittlung konfigurierten A-Schnittstellenschaltungsbetriebsmitteln gemäß den in der Anforderung geführten Leitungsauswahl-Referenzinformationen; und
der A-Schnittstellenschaltung, die an das UE vergeben ist, entsprechende A-Schnittstellenschaltungsinformationen werden zu dem MSC-Server gesendet.

2. Verfahren nach Anspruch 1, **dadurch gekennzeichnet, dass** die Leitungsauswahl-Referenzinformationen Folgendes umfassen:
Network Identifier NI und Originating Signaling Point Code OPC und Destination Signaling Point Code DPC; oder
Office Code OFC.

3. Verfahren nach Anspruch 2, **dadurch gekennzeichnet, dass** die Leitungsauswahl-Referenzinformationen ferner Folgendes umfassen:
Trägerfähigkeit BC eines öffentlichen landgestützten Mobilnetzes PLMN, Codec-Liste.

4. Verfahren nach Anspruch 1, **dadurch gekennzeichnet, dass** das Vergeben einer A-Schnittstellenschaltung an das UE Folgendes umfasst:
Vergeben einer A-Schnittstellenschaltung an das UE aus den freien A-Schnittstellenschaltungen in A-Schnittstellenschaltungsbetriebsmitteln, die in einer Ortsvermittlung konfiguriert sind.

5. Verfahren nach Anspruch 4, **dadurch gekennzeichnet, dass** das Verfahren nach dem Vergeben einer A-Schnittstellenschaltung an das UE ferner Folgendes umfasst:
das MGW setzt die an das UE vergebene A-Schnittstellenschaltung auf einen Belegt-Status.

6. Verfahren nach Anspruch 1, **dadurch gekennzeichnet, dass** das Senden von der A-Schnittstellenschaltung, die an das UE vergeben ist, entsprechenden A-Schnittstellenschaltungsinformationen zu dem MSC-Server Folgendes umfasst:
Beschaffen von A-Schnittstellenschaltungsinformationen, die der A-Schnittstellenschaltung entsprechen, die an das UE vergeben ist, gemäß einer vorbestimmten Assoziation zwischen den A-Schnittstellenschaltungen und den A-Schnittstellenschaltungsinformationen; und Senden der beschafften A-Schnittstellenschaltungsinformationen zu dem MSC-Server;
wobei die A-Schnittstellenschaltungsinformationen mindestens eine der folgenden Alternativen umfassen: einen Circuit Identification Code CIC oder einen Termination Identifier TID.

7. Verfahren nach Anspruch 6, **dadurch gekennzeichnet, dass** das Senden von der A-Schnittstellenschaltung, die an das UE vergeben ist, entsprechenden A-Schnittstellenschaltungsinformationen zu dem MSC-Server Folgendes umfasst:
das MGW sendet die A-Schnittstellenschaltungsinformationen zu dem MSC-Server durch eine Termination-Hinzufügeantwortnachricht.

8. Verfahren nach Anspruch 6, **dadurch gekennzeichnet, dass** das Verfahren nach dem Senden von der A-Schnittstellenschaltung, die an das UE vergeben ist, die der A-Schnittstellenschaltung entsprechen, entsprechenden A-Schnittstellenschaltungsinformationen zu dem MSC-Server ferner Folgendes umfasst:
das MGW empfängt eine Leitungsbetriebsmittel-Freigabeanforderung zum Freigeben des Leitungsbetriebsmittels der an das UE vergebenen A-Schnittstellenschaltung;
und
Durchführen einer Freigabe einer A-Schnittstellenschaltung gemäß den in der Leitungsbetriebsmittel-Freigabeanforderung geführten A-Schnittstellenschaltungsinformationen, wobei die A-Schnittstellenschaltungsinformationen der A-Schnittstellenschaltung entsprechen, die freigegeben werden muss.

9. Verfahren nach Anspruch 8, **dadurch gekennzeichnet, dass** die A-Schnittstelleninformationen, die der A-Schnittstellenschaltung entsprechen, die freigegeben werden muss, einen Circuit Identification Code CIC oder einen Termination Identifier TID umfassen; und
die Freigabe der A-Schnittstellenschaltung Folgendes umfasst: das MGW bestimmt die freizugebende A-Schnittstellenschaltung auf der Basis des CIC oder TID und eine vorbestimmte Assoziation zwischen den A-Schnittstellenschaltungen und CICs, TIDs; und Freigeben der A-Schnittstellenschaltung.

10. Verfahren nach Anspruch 8, **dadurch gekennzeichnet, dass** das Verfahren nach dem Freigeben der A-Schnittstellenschaltung ferner Folgendes umfasst:
das MGW setzt die freigegebene A-Schnittstellenschaltung auf einen Belegt-Status.

11. System zum Verwalten einer A-Schnittstellenschaltung, **dadurch gekennzeichnet, dass** es ein Media-Gateway MGW und einen Server einer Mobilvermittlungsstelle MSC umfasst, wobei
der MSC-Server dafür ausgelegt ist, eine Leitungsbetriebsmittel-Vergabeanforderung zum Vergeben einer A-Schnittstellenschaltung an ein Benutzergerät UE zu dem MGW zu senden;
das MGW dafür ausgelegt ist, die durch den MSC-Server gesendete Leitungsbetriebsmittel-Vergabeanforderung zu empfangen, in der Anforderung geführte Leitungsauswahl-Referenzinformationen zu beschaffen, gemäß den in der Anforderung geführten Leitungsauswahl-Referenzinformationen eine A-Schnittstellenschaltung an das UE aus in einer Ortsvermittlung konfigurierten A-Schnittstellenschaltungsbetriebsmitteln zu vergeben und A-Schnittstellenschaltungsinformationen, die der A-Schnittstellenschaltung entsprechen, die an das UE vergeben ist, zu dem MSC-Server zu senden.

12. System nach Anspruch 11, **dadurch gekennzeichnet, dass** das MGW ferner dafür ausgelegt ist, die A-Schnittstellenschaltung, die an das UE vergeben ist, auf einen Belegt-Status zu setzen.

13. System nach Anspruch 11, **dadurch gekennzeichnet, dass** der MSC-Server dafür ausgelegt ist, zu dem MGW eine Leitungsbetriebsmittel-Freigabeanforderung zum Freigeben des Leitungsbetriebsmittels der an das UE vergebenen A-Schnittstellenschaltung zu senden;
und das MGW ferner dafür ausgelegt ist, die Leitungsbetriebsmittel-Freigabeanforderung von dem MSC-Server zu empfangen und die A-Schnittstellenschaltung gemäß den in der Anforderung geführten A-Schnittstellenschaltungsinformationen freizugeben, wobei die A-Schnittstellenschaltungsinformationen der A-Schnittstellenschaltung entsprechen, die freigegeben werden muss.

14. System nach Anspruch 13, **dadurch gekennzeichnet, dass** das MGW ferner dafür ausgelegt ist, die freigegebene A-Schnittstellenschaltung auf einen Frei-Status zu setzen.

15. Media-Gateway MGW, **dadurch gekennzeichnet, dass** es eine Sender/- Empfängereinheit und eine Vergabeeinheit umfasst, wobei
die Sender-/Empfängereinheit dafür ausgelegt ist, eine durch einen Server einer Mobilvermittlungsstelle MSC gesendete Leitungsbetriebsmittel-Vergabeanforderung zum Vergeben einer A-Schnittstellenschaltung an ein Benutzergerät UE zu empfangen und die empfangene Leitungsbetriebsmittel-Vergabeanforderung zu der Vergabeeinheit zu senden;
die Vergabeeinheit dafür ausgelegt ist, die Leitungsbetriebsmittel-Vergabeanforderung von der Sender-/Empfängereinheit zu empfangen, die in der Anforderung geführten Leitungsauswahl-Referenzinformationen zu beschaffen und gemäß den in der Anforderung geführten Leitungsauswahl-Referenzinformationen eine A-Schnittstellenschaltung an das UE aus in einer Ortsvermittlung konfigurierten A-Schnittstellenschaltungsbetriebsmitteln zu vergeben;
und die Sender-/Empfängereinheit ferner dafür ausgelegt ist, zu dem MSC-Server A-Schnittstellenschaltungsinformationen zu senden, die der A-Schnittstellenschaltung entsprechen, die an das UE vergeben ist.

16. MGW nach Anspruch 15, **dadurch gekennzeichnet, dass** die Vergabeeinheit ferner dafür ausgelegt ist, die vergebene A-Schnittstellenschaltung auf einen Belegt-Status zu setzen.

17. MGW nach Anspruch 15 oder 16, **dadurch gekennzeichnet, dass** es ferner eine Freigabeeinheit umfasst, wobei
die Sender-/Empfängereinheit ferner dafür ausgelegt ist, von dem MSC-Server eine Leitungsbetriebsmittel-Freigabeanforderung zum Freigeben der an das UE vergebenen A-Schnittstellenschaltung zu empfangen und die empfangene Leitungsbetriebsmittel-Freigabeanforderung zu der Freigabeeinheit zu senden;
und die Freigabeeinheit dafür ausgelegt ist, die Leitungsbetriebsmittel-Freigabeanforderung von der Sender-/Empfängereinheit zu empfangen und die A-Schnittstellenschaltung gemäß den in der Anforderung geführten A-Schnittstellenschaltungsinformationen freizugeben, wobei die A-Schnittstellenschaltungsinformationen der A-Schnittstellenschaltung entsprechen, die freigegeben werden muss.

18. MGW nach Anspruch 17, **dadurch gekennzeichnet, dass** die Freigabeeinheit ferner dafür ausgelegt ist, die freigegebene A-Schnittstellenschaltung auf einen Frei-Status zu setzen.

## Revendications

1. Procédé de gestion d'un circuit d'interface A, **caractérisé en ce qu'**il consiste à :
acquérir, au moyen d'une Passerelle Multimédia, ou MGW, après réception d'une demande d'affectation de ressource de circuit destinée à affecter un circuit d'interface A à un Équipement Utilisateur, ou UE, des informations de référence de sélection de circuit acheminées dans la demande, dans lequel la demande d'affectation de ressource de circuit est envoyée à la MGW par un Serveur de Centre de Commutation Mobile, ou MSC ;
affecter, au moyen de la MGW, un circuit d'interface A à l'UE parmi des ressources de circuits d'interface A configurées dans un central local conformément aux informations de référence de sélection de circuit acheminées dans la demande ; et
envoyer au serveur MSC des informations de circuit d'interface A correspondant au circuit d'interface A qui est affecté à l'UE.

2. Procédé selon la revendication 1, **caractérisé en ce que** les informations de référence de sélection de circuit comprennent :
un Identifiant de Réseau, ou NI, et un Code de Point de Signalisation d'Origine, ou OPC, et un Code de Point de Signalisation de Destination, ou DPC ; ou
un Code de Central, ou OFC.

3. Procédé selon la revendication 2, **caractérisé en ce que** les informations de référence de sélection de circuit comprennent en outre :
une Capacité de Porteur, ou BC, d'un Réseau Mobile Terrestre Public, ou PLMN, Liste de Codecs.

4. Procédé selon la revendication 1, **caractérisé en ce que** l'affectation d'un circuit d'interface A à l'UE consiste à :
affecter un circuit d'interface A à l'UE parmi les circuits d'interface A inactifs dans des ressources de circuits d'interface A configurées dans un central local.

5. Procédé selon la revendication 4, **caractérisé en ce que**, après affectation d'un circuit d'interface A à l'UE, le procédé consiste en outre à :
régler, au moyen de la MGW, le circuit d'interface A affecté à l'UE dans un état occupé.

6. Procédé selon la revendication 1, **caractérisé en ce que** l'envoi au serveur MSC d'informations de circuit d'interface A correspondant au circuit d'interface A qui est affecté à l'UE consiste à :
acquérir des informations de circuit d'interface A correspondant au circuit d'interface A qui est affecté à l'UE conformément à une association prédéterminée entre les circuits d'interface A et les informations de circuits d'interface A ; et envoyer les informations de circuits d'interface A acquises au serveur MSC ;
dans lequel les informations de circuits d'interface A comprennent au moins l'une des suivantes : un Code d'Identification de Circuit, ou CIC, ou un Identifiant de Terminaison, ou TID.

7. Procédé selon la revendication 6, **caractérisé en ce que** l'envoi au serveur MSC d'informations de circuit d'interface A correspondant au circuit d'interface A qui est affecté à l'UE consiste à :
envoyer, au moyen de la MGW, les informations de circuit d'interface A au serveur MSC par l'intermédiaire d'un message de réponse pour l'ajout d'une terminaison.

8. Procédé selon la revendication 6, **caractérisé en ce que**, après l'envoi au serveur MSC d'informations de circuit d'interface A correspondant au circuit d'interface A qui est affecté à l'UE, le procédé consiste en outre à :
recevoir, au moyen de la MGW, une demande de libération de ressource de circuit destinée à libérer la ressource de circuit du circuit d'interface A affecté à l'UE ; et
effectuer une libération du circuit d'interface A conformément aux informations de circuit d'interface A acheminées dans la demande de libération de ressource de circuit, dans lequel les informations de circuit d'interface A correspondent au circuit d'interface A qu'il est nécessaire de libérer.

9. Procédé selon la revendication 8, **caractérisé en ce que** les informations d'interface A correspondant au circuit d'interface A qu'il est nécessaire de libérer comprennent un Code d'Identification de Circuit, ou CIC, ou un Identifiant de Terminaison, ou TID ; et
la libération du circuit d'interface A consiste à : déterminer, au moyen de la MGW, le circuit d'interface A devant être libéré sur la base du CIC ou du TID, et une association prédéterminée entre les circuits d'interface A et les CIC et les TID ; et à libérer le circuit d'interface A.

10. Procédé selon la revendication 8, **caractérisé en ce que**, après libération du circuit d'interface A, le procédé consiste en outre à :
régler, au moyen de la MGW, le circuit d'interface A libéré dans un état occupé.

11. Système de gestion d'un circuit d'interface A, **caractérisé en ce qu'**il comprend une Passerelle Multimédia, ou MGW, et un serveur de Centre de Commutation Mobile, ou MSC, dans lequel :
le serveur MSC est configuré pour envoyer à la MGW une demande d'affectation de ressource de circuit destinée à affecter un circuit d'interface A à un Équipement Utilisateur, ou UE ;
la MGW est configurée pour recevoir la demande d'affectation de ressource de circuit envoyée par le serveur MSC, acquérir des informations de référence de sélection de circuit acheminées dans la demande, affecter un circuit d'interface A à l'UE parmi des ressources de circuits d'interface A configurées dans un central local conformément aux informations de référence de sélection de circuit acheminées dans la demande ; et
envoyer au serveur MSC des informations de circuit d'interface A correspondant au circuit d'interface A qui est affecté à l'UE.

12. Système selon la revendication 11, **caractérisé en ce que** la MGW est en outre configurée pour régler le circuit d'interface A qui est affecté à l'UE dans un état occupé.

13. Système selon la revendication 11, **caractérisé en ce que** le serveur MSC est configuré pour envoyer à la MGW une demande de libération de ressource de circuit destinée à libérer la ressource de circuit du circuit d'interface A affectée à l'UE ;
la MGW est en outre configurée pour recevoir la demande de libération de ressource de circuit du serveur MSC et pour libérer le circuit d'interface A conformément aux informations de circuit d'interface A acheminées dans la demande, dans lequel les informations de circuit d'interface A correspondent au circuit d'interface A qu'il est nécessaire de libérer.

14. Système selon la revendication 13, **caractérisé en ce que** la MGW est en outre configurée pour régler le circuit d'interface A libéré dans un état inactif.

15. Passerelle multimédia, ou MGW, **caractérisée en ce qu'**elle comprend une unité d'émission/réception et une unité d'affectation, dans laquelle :
l'unité d'émission/réception est configurée pour recevoir une demande d'affectation de ressource de circuit afin d'affecter un circuit d'interface A à un Équipement Utilisateur, ou UE, envoyée par le Serveur de Centre de Commutation Mobile, ou
MSC, et envoyer la demande d'affectation de ressource de circuit reçue à l'unité d'affectation ;
l'unité d'affectation est configurée pour recevoir de l'unité d'émission/réception la demande d'affectation de ressource de circuit, acquérir des informations de référence de sélection de circuit acheminées dans la demande, et affecter un circuit d'interface A à l'UE parmi des ressources de circuit d'interface A configurées dans un central local conformément aux informations de référence de sélection de circuit acheminées dans la demande ;
l'unité d'émission/réception est en outre configurée pour envoyer au serveur MSC des informations de circuit d'interface A correspondant au circuit d'interface A qui est affecté à l'UE.

16. Passerelle MGW selon la revendication 15, **caractérisée en ce que** l'unité d'affectation est en outre configurée pour régler le circuit d'interface A affecté dans un état occupé.

17. Passerelle MGW selon la revendication 15 ou 16, **caractérisée en ce qu'**elle comprend en outre une unité de libération, dans laquelle :
l'unité d'émission/réception est en outre configurée pour recevoir du Serveur MSC une demande de libération de ressource de circuit destinée à libérer le circuit d'interface A affecté à l'UE, et pour envoyer la demande de libération de ressource de circuit reçue à l'unité de libération ;
l'unité de libération est configurée pour recevoir de l'unité d'émission/réception la demande de libération de ressource de circuit, et libérer le circuit d'interface A conformément aux informations de circuit d'interface A acheminées dans la demande, dans laquelle les informations de circuit d'interface A correspondent au circuit d'interface A qu'il est nécessaire de libérer.

18. Passerelle MGW selon la revendication 17, **caractérisée en ce que** l'unité de libération est en outre configurée pour régler le circuit d'interface A libéré dans un état inactif.
